# EUROPEAN PATENT APPLICATION

(11) **EP 1 770 947 A1**
(43) Date of publication of application: **04.04.2007**
(21) Application number: 06121383.1
(22) Date of filing: 27.09.2006
(51) Int. Cl.: H04L 29/06, H04M 7/00, H04L 29/12

(54) **Method and apparatus for providing endpoint and access independent virtual numbers**

(30) Priority: 30.09.2005 US 240100
(71) Applicant: AT&T Corp., New York, NY 10013-2412 (US)
(72) Inventor: Croak, Marian, Fair Haven, NJ New Jersey 07704 (US); Eslambolchi, Hossein, Los Altos Hills, CA California 94022 (US)
(74) Representative: Harding, Richard Patrick

(57) **Abstract**

A method and apparatus for enabling subscribers using any access technology and endpoint equipment to subscribe to VolP network services and to use the advanced features provided by VolP networks to receive incoming calls are disclosed. The present method enables subscribers to use a virtual number, which they can associate with any existing phone lines that they have already subscribed to, including traditional PSTN telephone lines, mobile phone lines, or even IP based phone lines. For example, subscribers can set up an advanced feature so that calls to this virtual phone number can be forwarded to the subscriber's phones serially or in parallel depending on the preferences of the subscriber and the identity of the incoming caller. All advanced features associated with VoIP services can be made available to subscribers through these virtual numbers.

## Description

The present invention relates generally to communication networks and, more particularly, to a method and apparatus for providing endpoint and access independent virtual numbers for incoming calls in a communication network, e.g. a packet network such as a Voice over Internet Protocol (VoIP) network.

### BACKGROUND OF THE INVENTION

Residential VoIP network services provide subscribers with advanced telephony features that give them more control and management of their calls than traditional Public Switched Telephone Network (PSTN) services. These services, however, require subscribers to access their networks through broadband technologies such as cable modems or Digital Subscriber Loop (DSL) access arrangements. Additionally, these VoIP service providers require users to access the VoIP network features via new premise equipment such as Terminal Adaptors (TA) that convert PSTN signaling and media flows to VoIP based signaling and media flows. There are tremendous business opportunities if the same advanced telephony features can be made available to subscribers of telephony services with any endpoint types and access technologies to receive incoming phone calls.

Therefore, a need exists for a method and apparatus for providing endpoint and access independent virtual numbers for incoming calls in a packet network, e.g., a VoIP network.

### SUMMARY OF THE INVENTION

In one embodiment, the present invention enables subscribers using any access technology and/or endpoint equipment to subscribe to packet network services, e.g., VoIP network services and use the advanced features provided by VoIP networks to receive incoming calls. The present invention enables subscribers to use a virtual number, which they can associate with any existing phone lines they have already subscribed to, including traditional PSTN telephone lines, mobile phone lines, or even IP based phone lines. For example, subscribers can set up an advanced feature so that calls to this virtual phone number can be forwarded to the subscriber's phones serially or in parallel depending on the preferences of the subscriber and the identity of the incoming caller. All advanced features associated with VoIP services can be made available to subscribers through these virtual numbers, and the subscribers can even benefit from the VoIP network through PSTN based endpoints and wireless endpoints. A virtual number is a phone number that is associated with one or more other endpoint phone numbers to which incoming calls are forwarded to. When a call is made to a virtual number, the incoming call will be forwarded to the registered list of one or more other endpoint phone numbers instead.

### BRIEF DESCRIPTION OF THE DRAWINGS

The teaching of the present invention can be readily understood by considering the following detailed description in conjunction with the accompanying drawings, in which:

FIG. 1 illustrates an exemplary Voice over Internet Protocol (VoIP) network related to the present invention;

FIG. 2 illustrates an example of enabling endpoint and access independent virtual numbers for incoming calls in a VoIP network related to the present invention;

FIG. 3 illustrates a flowchart of a method for enabling endpoint and access independent virtual numbers for incoming calls in a VoIP network of the present invention; and

FIG. 4 illustrates a high level block diagram of a general purpose computer suitable for use in performing the functions described herein.

To facilitate understanding, identical reference numerals have been used, where possible, to designate identical elements that are common to the figures.

### DETAILED DESCRIPTION

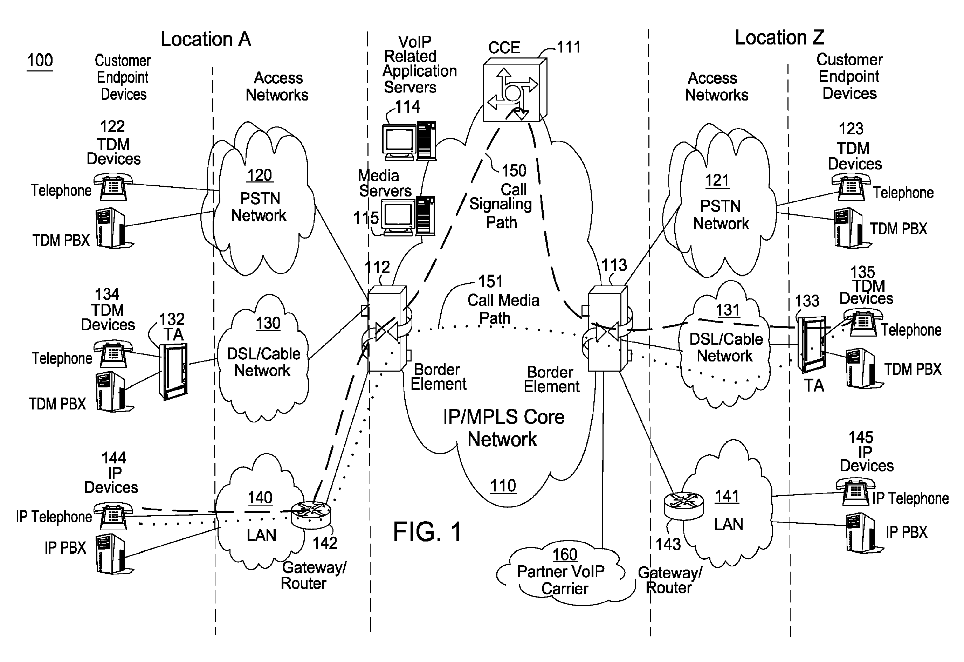

To better understand the present invention, FIG. 1 illustrates an example network 100, e.g., a packet network such as a VoIP network related to the present invention. Exemplary packet networks include internet protocol (IP) networks, asynchronous transfer mode (ATM) networks, frame-relay networks, and the like. An IP network is broadly defined as a network that uses Internet Protocol to exchange data packets. Thus, a VoIP network or a SoIP (Service over Internet Protocol) network is considered an IP network.

In one embodiment, the VoIP network may comprise various types of customer endpoint devices connected via various types of access networks to a carrier (a service provider) VoIP core infrastructure over an Internet Protocol/Multi-Protocol Label Switching (IP/MPLS) based core backbone network. Broadly defined, a VoIP network is a network that is capable of carrying voice signals as packetized data over an IP network. The present invention is described below in the context of an illustrative VoIP network. Thus, the present invention should not be interpreted to be limited by this particular illustrative architecture.

The customer endpoint devices can be either Time Division Multiplexing (TDM) based or IP based. TDM based customer endpoint devices 122, 123, 134, and 135 typically comprise of TDM phones or Private Branch Exchange (PBX). IP based customer endpoint devices 144 and 145 typically comprise IP phones or IP PBX. The Terminal Adaptors (TA) 132 and 133 are used to provide necessary interworking functions between TDM customer endpoint devices, such as analog phones, and packet based access network technologies, such as Digital Subscriber Loop (DSL) or Cable broadband access networks. TDM based customer endpoint devices access VoIP services by using either a Public Switched Telephone Network (PSTN) 120, 121 or a broadband access network via a TA 132 or 133. IP based customer endpoint devices access VoIP services by using a Local Area Network (LAN) 140 and 141 with a VoIP gateway or router 142 and 143, respectively.

The access networks can be either TDM or packet based. A TDM PSTN 120 or 121 is used to support TDM customer endpoint devices connected via traditional phone lines. A packet based access network, such as Frame Relay, ATM, Ethernet or IP, is used to support IP based customer endpoint devices via a customer LAN, e.g., 140 with a VoIP gateway and router 142. A packet based access network 130 or 131, such as DSL or Cable, when used together with a TA 132 or 133, is used to support TDM based customer endpoint devices.

The core VoIP infrastructure comprises of several key VoIP components, such the Border Element (BE) 112 and 113, the Call Control Element (CCE) 111, VoIP related Application Servers (AS) 114, and Media Server (MS) 115. The BE resides at the edge of the VoIP core infrastructure and interfaces with customers endpoints over various types of access networks. A BE is typically implemented as a Media Gateway and performs signaling, media control, security, and call admission control and related functions. The CCE resides within the VoIP infrastructure and is connected to the BEs using the Session Initiation Protocol (SIP) over the underlying IP/MPLS based core backbone network 110. The CCE is typically implemented as a Media Gateway Controller or a softswitch and performs network wide call control related functions as well as interacts with the appropriate VoIP service related servers when necessary. The CCE functions as a SIP back-to-back user agent and is a signaling endpoint for all call legs between all BEs and the CCE. The CCE may need to interact with various VoIP related Application Servers (AS) in order to complete a call that require certain service specific features, e.g. translation of an E.164 voice network address into an IP address.

For calls that originate or terminate in a different carrier, they can be handled through the PSTN 120 and 121 or the Partner IP Carrier 160 interconnections. For originating or terminating TDM calls, they can be handled via existing PSTN interconnections to the other carrier. For originating or terminating VoIP calls, they can be handled via the Partner IP carrier interface 160 to the other carrier.

In order to illustrate how the different components operate to support a VoIP call, the following call scenario is used to illustrate how a VoIP call is setup between two customer endpoints. A customer using IP device 144 at location A places a call to another customer at location Z using TDM device 135. During the call setup, a setup signaling message is sent from IP device 144, through the LAN 140, the VoIP Gateway/Router 142, and the associated packet based access network, to BE 112. BE 112 will then send a setup signaling message, such as a SIP-INVITE message if SIP is used, to CCE 111. CCE 111 looks at the called party information and queries the necessary VolP service related application server 114 to obtain the information to complete this call. In one embodiment, the Application Server (AS) functions as a SIP back-to-back user agent. If BE 113 needs to be involved in completing the call; CCE 111 sends another call setup message, such as a SIP-INVITE message if SIP is used, to BE 113. Upon receiving the call setup message, BE 113 forwards the call setup message, via broadband network 131, to TA 133. TA 133 then identifies the appropriate TDM device 135 and rings that device. Once the call is accepted at location Z by the called party, a call acknowledgement signaling message, such as a SIP 200 OK response message if SIP is used, is sent in the reverse direction back to the CCE 111. After the CCE 111 receives the call acknowledgement message, it will then send a call acknowledgement signaling message, such as a SIP 200 OK response message if SIP is used, toward the calling party. In addition, the CCE 111 also provides the necessary information of the call to both BE 112 and BE 113 so that the call data exchange can proceed directly between BE 112 and BE 113. The call signaling path 150 and the call media path 151 are illustratively shown in FIG. 1. Note that the call signaling path and the call media path are different because once a call has been setup up between two endpoints, the CCE 111 does not need to be in the data path for actual direct data exchange.

Media Servers (MS) 115 are special servers that typically handle and terminate media streams, and to provide services such as announcements, bridges, transcoding, and Interactive Voice Response (IVR) messages for VoIP service applications.

Note that a customer in location A using any endpoint device type with its associated access network type can communicate with another customer in location Z using any endpoint device type with its associated network type as well. For instance, a customer at location A using IP customer endpoint device 144 with packet based access network 140 can call another customer at location Z using TDM endpoint device 123 with PSTN access network 121. The BEs 112 and 113 are responsible for the necessary signaling protocol translation, e.g., SS7 to and from SIP, and media format conversion, such as TDM voice format to and from IP based packet voice format.

Residential VoIP network services provide subscribers with advanced telephony features that give them more control and management of their calls than traditional Public Switched Telephone Network (PSTN) services. These services, however, require subscribers to access their networks through broadband technologies such as cable modems or Digital Subscriber Loop (DSL) access arrangements. Additionally, these VoIP service providers require users to access the VoIP network features via new premise equipment such as Terminal Adaptors (TA) that convert PSTN signaling and media flows to VoIP based signaling and media flows. There are tremendous business opportunities if the same advanced telephony features can be made available to subscribers of telephony services with any endpoint types and access technologies to receive incoming phone calls.

To address this need, the present invention enables subscribers using any access technology and/or endpoint equipment to subscribe to VoIP network services and use the advanced features provided by VoIP networks to receive incoming calls. The present invention enables subscribers to use a virtual number, which they can associate with any existing phone lines they have already subscribed to, including traditional PSTN telephone lines, mobile phone lines, or even IP based phone lines. For example, subscribers can set up an advanced feature so that calls to this virtual phone number can be forwarded to the subscriber's phones serially or in parallel depending on the preferences of the subscriber and the identity of the incoming caller. All advanced features associated with VoIP services can be made available to subscribers through these virtual numbers, and the subscribers can even benefit from the VoIP network through PSTN based endpoints and wireless endpoints. A virtual number is a phone number that is associated with one or more other endpoint phone numbers to which incoming calls are forwarded to. When a call is made to a virtual number, the incoming call will be forwarded to the registered list of one or more other endpoint phone numbers instead.

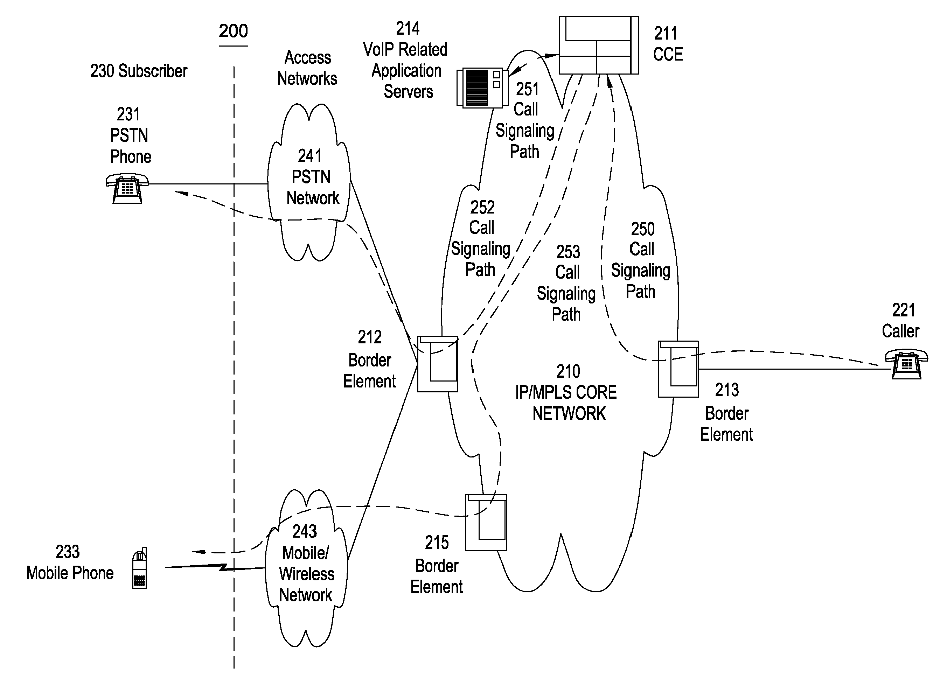

FIG. 2 illustrates an exemplary communication architecture 200 for providing endpoint and access independent virtual numbers for incoming calls in a packet network 210, e.g., a VoIP network related to the present invention. In FIG. 2, subscriber 230 has two existing phone lines, a PSTN phone line 231 and a mobile phone line 233. Note that subscriber 230 does not use or own any VoIP endpoint device, such as a TA. In addition, subscriber 230 also subscribes to the endpoint and access independent virtual numbers for incoming calls service feature from a VoIP network provider. Subscriber 230 is assigned a virtual number to receive incoming calls. Subscriber 230 has registered the virtual number to be associated with the two existing phone lines, PSTN phone line 231 and mobile phone line 233. Subscriber 230 also has configured the service logic of the virtual number to call the two existing phone lines simultaneously when an incoming call is received at the virtual number. Subscriber 230 gives out the virtual number to other callers, such as caller 221, as the subscriber's main contact number. Then, caller 221 makes a call to subscriber 230 using the virtual number using call signaling path 250 via BE213. Upon receiving the setup message from caller 221, CCE 211 communicates with AS 214, using signaling path 251, and finds out that the called virtual number belongs to subscriber 230 who has subscribed to the endpoint and access independent virtual numbers for incoming calls service feature. CCE 211 also retrieves the pre-configured service logic associated with the called virtual number set up by subscriber 230. CCE 211 then simultaneously sends the call to, according to the configured service logic, PSTN phone 231 and mobile phone 233 that belong to subscriber 230, using signaling flow 252 via BE 212 and access network 241 and signaling flow 253, via BE 215 and access network 243, respectively. In this example, subscriber 230 has no VoIP endpoints associated with the VoIP network supporting the virtual number service feature. Subscriber 230 uses non-VoIP access and endpoint technologies and still benefit from the advanced features offered by VoIP network providers using the endpoint and access independent virtual numbers for incoming calls service feature.

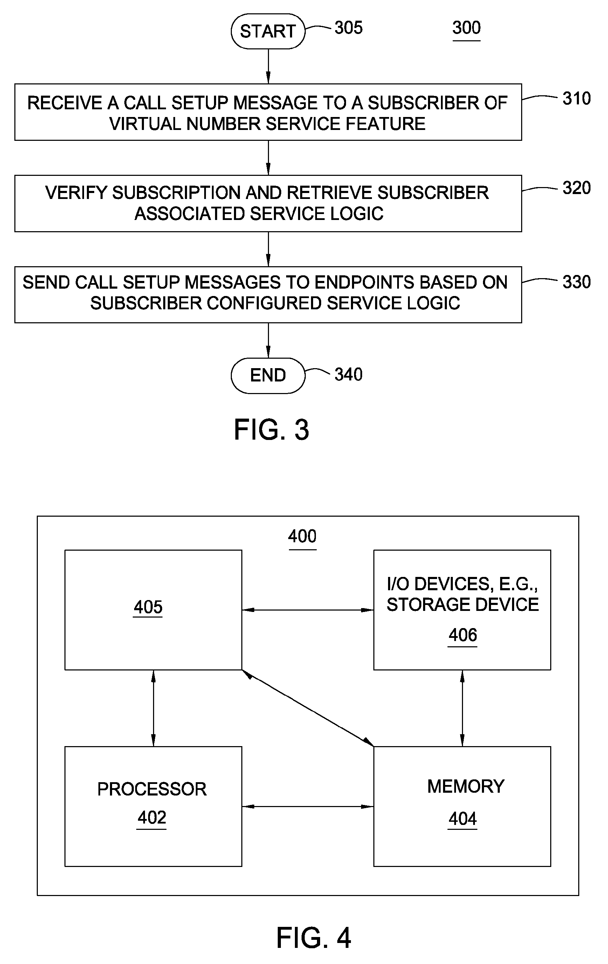

FIG. 3 illustrates a flowchart of a method 300 for enabling endpoint and access independent virtual numbers for incoming calls in a packet network, e.g., a VoIP network of the present invention. Method 300 starts in step 305 and proceeds to step 310.

In step 310, the method receives a call setup message, via a virtual number, to a subscriber who has subscribed to the endpoint and access independent virtual numbers for incoming calls service feature.

In step 320, the method verifies the subscription information of the called virtual number and retrieves the service logic associated with the subscribed virtual number. For example, a CCE receiving the incoming call will verify the subscription information with an application server of the communication network.

In step 330, the method sends the call setup message to one or more endpoints specified in the retrieved service logic. For instance, service logic may include, but not limited to, calling a list of registered endpoint phone numbers in serial (e.g., one phone number at a time) or in parallel (e.g., all the phone numbers at the same time) or calling different subsets of the list of registered endpoint phone numbers based on time of date and day of week arrangement. The method ends in step 340.

FIG. 4 depicts a high level block diagram 400 of a general purpose computer suitable for use in performing the functions described herein. As depicted in FIG. 4, the system 400 comprises a processor element 402 (e.g., a CPU), a memory 404, e.g., random access memory (RAM) and/or read only memory (ROM), a module 405 for providing endpoint and access independent virtual numbers for incoming calls, and various input/output devices 406 (e.g., storage devices, including but not limited to, a tape drive, a floppy drive, a hard disk drive or a compact disk drive, a receiver, a transmitter, a speaker, a display, a speech synthesizer, an output port, and a user input device (such as a keyboard, a keypad, a mouse, and the like)).

It should be noted that the present invention can be implemented in software and/or in a combination of software and hardware, e.g., using application specific integrated circuits (ASIC), a general purpose computer or any other hardware equivalents. In one embodiment, the present module or process 405 for providing endpoint and access independent virtual numbers for incoming calls can be loaded into memory 404 and executed by processor 402 to implement the functions as discussed above. As such, the present process 405 for providing endpoint and access independent virtual numbers for incoming calls (including associated data structures) of the present invention can be stored on a computer readable medium or carrier, e.g., RAM memory, magnetic or optical drive or diskette and the like.

While various embodiments have been described above, it should be understood that they have been presented by way of example only, and not limitation. Thus, the breadth and scope of a preferred embodiment should not be limited by any of the above-described exemplary embodiments, but should be defined only in accordance with the following claims and their equivalents.

## Claims

1. A method for providing a virtual number in a communication network, comprising:
assigning the virtual number in said communication network to a subscriber, where said subscriber has no Voice over Internet Protocol (VoIP) endpoint capability; and
associating the virtual number with at least one telephony endpoint phone number provided by said subscriber for receiving an incoming call.

2. The method of claim 1, wherein said communication network is a Voice over Internet Protocol, VoIP, network or a Service over Internet Protocol, SoIP, network.

3. The method of claim 1 or 2, wherein said virtual number is used to receive said incoming call to said subscriber independent of a type of access network used by said subscriber or a type of endpoint used by said subscriber.

4. The method of claim 1, 2 or 3, wherein said associating comprises:
configuring said at least one telephony endpoint phone number and corresponding service logics to be associated with the virtual number in said communication network; and
forwarding said incoming call to the virtual number to said at least one telephony endpoint phone number according to said service logics.

5. The method of claim 4, wherein said service logics are configured by said subscriber to be stored in an Application Server, AS, in said communication network.

6. The method of claim 4 or 5, wherein said incoming call to the virtual number is forwarded by a Call Control Element, CCE, to said at least one telephony endpoint phone number.

7. The method of claim 4, 5 or 6, wherein said service logics comprise at least one of:
service logics for forwarding said incoming call to the virtual number simultaneously to all of said at least one telephony endpoint phone number; or
service logics for forwarding said incoming call to the virtual number serially to each of said at least one telephony endpoint phone number in an order specified by said subscriber; or
service logics for forwarding said incoming call to the virtual number based on a time of day preference, or a day of week preference specified by said subscriber.

8. A computer-readable medium having stored thereon a plurality of instructions, the plurality of instructions including instructions which, when executed by a processor, cause the processor to perform the steps of the method of any one of the preceding claims.

9. An apparatus for providing a virtual number in a communication network, comprising:
means for assigning the virtual number in said communication network to a subscriber, where said subscriber has no Voice over Internet Protocol (VoIP) endpoint capability; and
means for associating the virtual number with at least one telephony endpoint phone number provided by said subscriber for receiving an incoming call.

10. The apparatus of claim 9, wherein said communication network is a Voice over Internet Protocol, VoIP, network or a Service over Internet Protocol, SoIP, network.

11. The apparatus of claim 9 or 10, wherein said virtual number is used to receive said incoming call to said subscriber independent of a type of access network used by said subscriber or a type of endpoint used by said subscriber.

12. The apparatus of claim 9, 10 or 11, wherein said associating means comprises:
means for configuring said at least one telephony endpoint phone number and corresponding service logics to be associated with the virtual number in said communication network; and
means for forwarding said incoming call to the virtual number to said at least one telephony endpoint phone number according to said service logics.

13. The apparatus of claim 12, wherein said service logics are configured by said subscriber to be stored in an Application Server (AS) in said communication network.

14. The apparatus of claim 12 or 13, wherein said service logics comprise at least one of:
service logics for forwarding said incoming call to the virtual number simultaneously to all of said at least one telephony endpoint phone number; or
service logics for forwarding said incoming call to the virtual number serially to each of said at least one telephony endpoint phone number in an order specified by said subscriber; or
service logics for forwarding said incoming call to the virtual number based on a time of day preference, or a day of week preference specified by said subscriber.
